# EUROPEAN PATENT SPECIFICATION

(11) **EP 3 700 050 B1**
(45) Date of publication and mention of the grant of the patent: **08.12.2021**
(21) Application number: 20158551.0
(22) Date of filing: 20.02.2020
(51) Int. Cl.: H02J 7/00

(54) **METHOD AND BATTERY MANAGEMENT SYSTEM FOR CONTROLLING CELL BALANCING**
VERFAHREN UND BATTERIEVERWALTUNGSSYSTEM ZUR STEUERUNG VON ZELLENAUSGLEICH
PROCÉDÉ ET SYSTÈME DE GESTION DE BATTERIE DE COMMANDE D'ÉQUILIBRAGE DE CELLULES

(30) Priority: 20.02.2019 KR 20190020036
(43) Date of publication of application: 26.08.2020
(73) Proprietor: Samsung SDI Co., Ltd., Gyeonggi-do 17084 (KR)
(72) Inventor: KIM, Jinwoo, 17084 Gyeonggi-Do (KR)
(74) Representative: Taor, Simon Edward William

(56) References cited:
- EP-A1- 2 490 315
- CN-U- 206 041 557
- US-A1- 2015 303 728

## Description

### BACKGROUND

### (a) Field

Exemplary embodiments relate to a cell balancing control method and a battery management system performing the same.

### (b) Description of the Related Art

Recently, according to strengthening of environmental regulations including CO₂ regulations, interest in environmentally-friendly vehicles has been increasing. Accordingly, vehicle companies have been actively researching and developing pure electrical vehicles and hydrogen vehicles, as well as hybrid and plug-in hybrid vehicles.

A battery pack for storing electrical energy obtained from various energy sources is mounted in the environmentally-friendly vehicles. Typically, a battery pack mounted on an environment-friendly vehicle or the like includes a plurality of battery modules connected in series with each other to supply high voltage electrical energy, and each of the battery modules is configured to include a plurality of cells connected in series or in parallel with each other. In addition, a battery management system (BMS) is mounted in the battery pack to protect the battery pack by detecting voltages, temperatures, and charge/discharge currents of each cell or battery module at all times when the battery pack is in an abnormal state.

A cell balancing function which compensates a voltage deviation between cells by monitoring the voltage of each of the cells constituting the battery module is one of the main functions of the battery management system. The battery management system includes an analog front end (AFE) IC that performs cell voltage monitoring and cell balancing functions for cell balancing, for each battery module, and a battery controller serving as an upper-level controller communicates with each AFE IC to control the cell balancing of each battery module.

It is very difficult for the battery controller to simultaneously activate the cell balancing for battery modules that require cell balancing due to characteristics of a signal transferring method between the battery controller and the AFE IC, and cell balancing activation may be performed sequentially for each battery module. Accordingly, battery modules have different timings at which cell balancing is activated, and thus, although cell balancing is allowed for the same period for the battery modules, the actual cell balancing time may vary for each battery module.

The above information disclosed in this Background section is only for enhancement of understanding of the background of the invention and therefore it may contain information that does not form the prior art that is already known in this country to a person of ordinary skill in the art.

US 2015/303728 discloses a battery monitoring device that monitors a battery having a plurality of cell groups in which a plurality of cells is connected in series. The battery monitoring device comprises at one or more integrated circuit units, each of which corresponds to each cell group, that respectively measure the voltages of the cells of the cell group and performs cell balancing in order to adjust the capacities of the cells of the cell group; a control unit that controls the integrated circuit unit; and a power supply unit that supplies power to the control unit. The control unit causes the integrated circuit unit to start or to stop cell balancing, and sets a timer period for starting or stopping supply of the power.

### SUMMARY

Exemplary embodiments have been made in an effort to provide a cell balancing control method that can eliminate a deviation of cell balancing execution times caused by a difference in cell balancing activation times between the battery modules, and a battery management system performing the same.

An exemplary embodiment of the present invention provides a battery management system including: a plurality of integrated circuits configured to perform a cell balancing control function of a corresponding battery module among a plurality of battery modules; and a battery controller configured to communicate with the integrated circuits to control cell balancing of the battery modules, and to repeatedly perform a first mode for sequentially activating cell balancing of the battery modules during a first period and a second mode for stopping the cell balancing of the battery modules during a second period that follows the first period, every predetermined cycle when cell balancing is required for the battery modules.

The battery controller may change an order in which the cell balancing of the battery modules is activated in the first mode for each cycle.

The battery controller, when entering the first mode, may sequentially output corresponding balancing start signals to the battery modules to activate the cell balancing of the battery modules.

The battery controller may change a cell balancing activation order of the battery modules by changing an order in which the balancing start signals are outputted for each cycle.

The battery controller may change an order in which the cell balancing of the battery modules is activated for each cycle such that an average balancing execution time during the first period is equalized for the battery modules.

The battery controller may cyclically shift the order in which the cell balancing of the battery modules is activated for each cycle.

In addition, an exemplary embodiment of the present invention provides a cell balancing control method of a battery management system, including: determining whether or not cell balancing of a plurality of battery modules is performed based on a cell voltage detection result for the battery modules; operating a first mode for sequentially activating cell balancing of a plurality of battery modules during a first period when it is determined that cell balancing is required for the battery modules; operating a second mode for deactivating the cell balancing of the battery modules during a second period when the first period ends; and repeatedly performing the first mode and the second mode every predetermined cycle until the cell balancing of the battery modules is completed.

The repeatedly performing may include changing an order in which the cell balancing of the battery modules is activated in the first mode for each cycle.

The operating of the first mode may include activating the cell balancing of the battery modules by outputting corresponding balancing start signals to the battery modules. The changing may include changing a cell balancing activation order of the battery modules by changing an order in which the balancing start signals are outputted for each cycle.

The changing may include changing an order in which the cell balancing of the battery modules is activated for each cycle such that an average balancing execution time during the first period is equalized for the battery modules.

The changing may include circularly shifting an order in which the cell balancing of the battery modules is activated in the first mode for each cycle.

According to the exemplary embodiments, the deviation of the cell balancing execution times caused by the difference in the cell balancing activation times between the battery modules may be eliminated.

### BRIEF DESCRIPTION OF THE DRAWINGS

FIG. 1 schematically illustrates a battery pack according to an exemplary embodiment.
FIG. 2 schematically illustrates a battery module according to an exemplary embodiment.
FIG. 3 illustrates an example of a cell balancing circuit of a battery module according to an exemplary embodiment.
FIG. 4 illustrates an example in which a battery controller outputs a control signal to control cell balancing of battery modules.
FIG. 5 illustrates an example of equalizing a balancing execution time in a battery management system according to an exemplary embodiment.
FIG. 6 schematically illustrates a cell balancing control method of a battery management system according to an exemplary embodiment.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

To clearly describe the exemplary embodiments, parts that are irrelevant to the description are omitted, and like numerals refer to like or similar constituent elements throughout the specification. Therefore, the reference numbers of the constituent elements used in a previous drawing may be used in a following drawing.

Further, since sizes and thicknesses of constituent members shown in the accompanying drawings are arbitrarily given for better understanding and ease of description, the exemplary embodiments are not limited to the illustrated sizes and thicknesses. In the drawings, the thickness of layers, films, panels, regions, etc., are exaggerated for clarity.

A case of electrically connecting two constituent elements includes not only a case of directly connecting the constituent elements but also a case of connecting the constituent elements via another constituent element therebetween. The constituent element therebetween may include a switch, a resistor, a capacitor, and the like. In describing exemplary embodiments, an expression of connection indicates electrical connection unless explicitly described to be direct connection.

Hereinafter, a cell balancing control method and a battery management system performing the same will be described in detail with reference to necessary drawings.

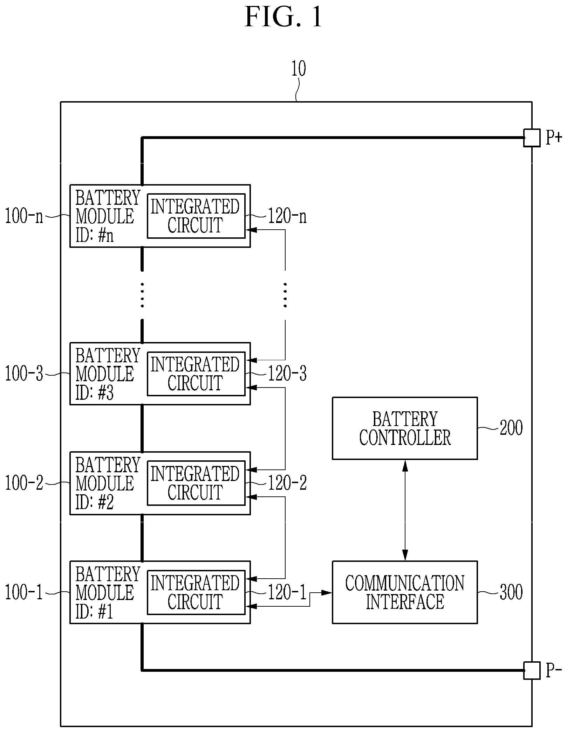

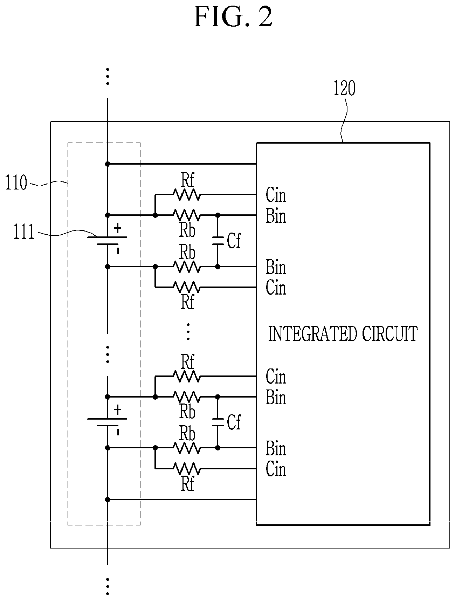

FIG. 1 schematically illustrates a battery pack according to an exemplary embodiment, and FIG. 2 schematically illustrates a battery module according to an exemplary embodiment.

Referring to FIG. 1, a battery pack 10 according to an exemplary embodiment may include a plurality of pack terminals P+ and P-, a plurality of battery modules 100-1, 100-2, 100-3, ..., and 100-n, a battery controller 200, and a communication interface 300.

The battery modules 100-1, 100-2, 100-3, ..., and 100-n may be connected in series between the pack terminals P + and P-, and each of the battery modules 100 may include a cell stack 110 and an integrated circuit 120 as illustrated in FIG. 2.

Referring to FIG. 2, the cell stack 110 may include a plurality of cells 111 electrically connected in series or in parallel with each other. In addition, the cell stacks 110 included in the battery modules 100-1, 100-2, 100-3, ..., 100-n may be electrically connected in series between the pack terminals P + and P― to output high voltage electrical energy.

The integrated circuit 120 may detect state information of the battery modules 100, such as a cell voltage, a charge/discharge current, a temperature, and the like of each of the cells 111 constituting the battery modules 100. For example, the integrated circuit 120 may detect a cell voltage of each cell 111 included in a corresponding battery module 100 through a voltage detection circuit (not illustrated). The voltage detection circuit may be connected to opposite ends of the corresponding cell 111 through two input terminals Cin and two filter resistors Rf of the integrated circuit 120 to detect the cell voltage of the corresponding cell 111.

The state information of the battery module 100 detected by the integrated circuit 120, such as a cell voltage detection result, may be cyclically transferred to the battery controller 200 to be used for controlling charge/discharge of the battery module 100, cell balancing, and the like.

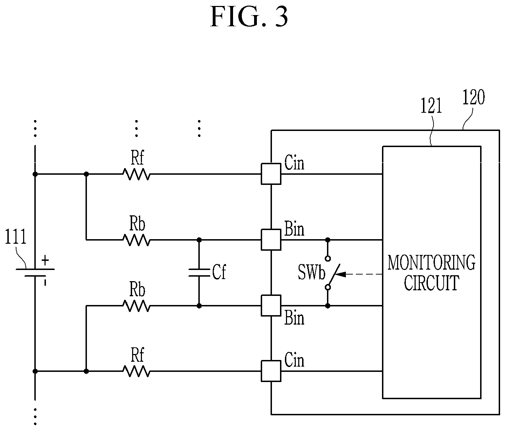

The integrated circuit 120 may also control the cell balancing of the corresponding battery module 100. FIG. 3 illustrates an example of a cell balancing circuit of a battery module according to an exemplary embodiment. Referring to FIG. 3 as an example, the cell balancing circuit includes two balancing resistors Rb connected between opposite ends of the cell 111 and the balancing terminals Bin to form a discharge path, and a balancing switch SWb for conducting or blocking a cell balancing current flowing through the balancing resistors Rb. The balancing switch SWb is connected between the two balancing resistors Rb through the balancing terminals Bin, and is connected between opposite ends of the corresponding cell 111 through the two balancing resistors Rb. Accordingly, when the balancing switch SWb is turned on by a monitoring circuit 121, a balancing current flows through the balancing resistors Rb connected to both ends of the corresponding cell 111 so as to perform discharge of the corresponding cell 111. On the other hand, when the balancing switch SWb is turned off by the monitoring circuit 121, a discharge path is cut off, so that a balancing current flow of the corresponding cell 111 is blocked.

The integrated circuit 120 described above may be implemented to include an analog front end (AFE) IC of a battery, a cell voltage monitoring (CVM) IC, and the like, and may operate as a battery management system of the battery pack 10 together with the battery controller 200 to be described later.

Referring to FIG. 1 again, the battery controller 200 may transmit/receive data with respect to the integrated circuits 120-1, 120-2, 120-3, ..., and 120-n of the plurality of battery modules 100-1, 100-2, 100-3, ..., and 100-n through the communication interface 300.

The communication interface 300 may support signal transmission and reception between the battery controller 200 and the integrated circuits 120-1, 120-2, 120-3, ..., and 120-n using different communication methods. When a signal is received from the battery controller 200 through a serial peripheral interface (SPI) such as a controller area network (CAN) communication, the communication interface 300 may transfer it to the integrated circuits 120-1, 120-2, 120-3, ..., and 120-n in a daisy chain manner through a universal asynchronous receiver transmitter (UART). In addition, for example, when a signal from the integrated circuits 120-1, 120-2, 120-3, ..., and 120-n is transferred through the UART in the daisy chain manner, it may be transferred to the battery controller 200 through the SPI. The communication interface 300 may be omitted when the battery controller 200 and the integrated circuits 120-1, 120-2, 120-3, ..., and 120-n directly communicate with each other.

The battery controller 200 may receive state information (e.g., a cell voltage detection result) of each of the battery modules 100-1, 100-2, 100-3, ..., and 100-n from the integrated circuits 120-1, 120-2, 120-3, ..., and 120-n, and may control charging and discharging of each battery module 100-1, 100-2, 100-3, ..., and 100-n based on the received state information.

In addition, the battery controller 200 may determine whether cell balancing is performed for each battery module 100-1, 100-2, 100-3, ..., and 100-n based on cell voltage detection results of each battery module 100-1, 100-2, 100-3, ..., and 100-n received from the integrated circuits 120-1, 120-2, 120-3, ..., and 120-n. The battery controller 200 may control cell balancing by transmitting a control signal to a battery module determined to need cell balancing among the battery modules 100-1, 100-2, 100-3, ..., and 100-n. Hereinafter, for convenience of description, a control signal instructing the battery controller 200 to start cell balancing for a specific battery module is referred to as a "balancing start signal", and a control signal instructing the battery controller 200 to stop, i.e., to deactivate the cell balancing of the battery modules to enter the balancing idle mode, is referred to as a "balancing stop signal".

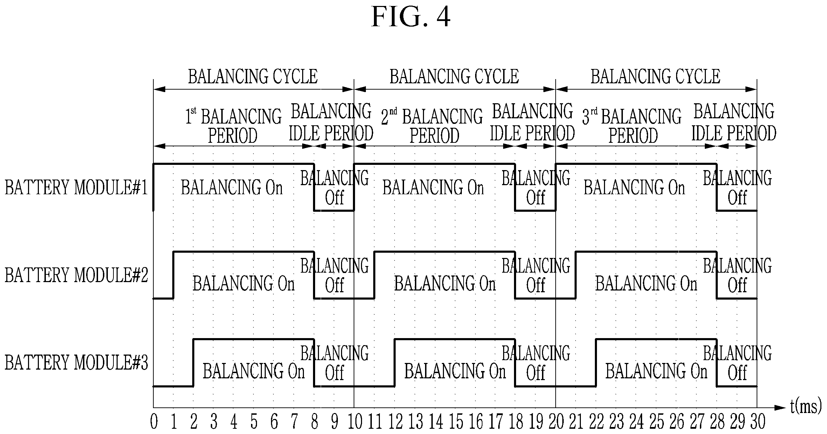

FIG. 4 illustrates an example in which a battery controller outputs a control signal to control cell balancing of battery modules.

As illustrated in FIG. 3, in the case where cell balancing is performed by allowing a current to flow through the balancing resistor Rb, when a cell balancing duration is too long, heat generation of the balancing resistor Rb may be a problem. In addition to the cell balancing control, the battery controller 200 periodically performs functions such as diagnosis and reception of state information of the battery modules 100-1, 100-2, 100-3, ..., and 100-n.

Accordingly, the battery controller 200 may alternately operate in a balancing mode for allowing cell balancing to the battery modules 100-1, 100-2, 100-3, ..., and 100-n and a balancing idle mode for stopping cell balancing of the battery modules 100-1, 100-2, 100-3, ..., and 100-n depending on a predetermined balancing cycle. Referring to FIG. 4, the battery controller 200 may operate in the balancing mode during a balancing period and operate in the balancing idle mode during a balancing idle period. During the balancing idle period, the battery controller 200 stops balancing of the battery modules 100-1, 100-2, 100-3, ..., and 100-n and performs functions such as diagnosis and state information reception.

Accordingly, the battery controller 200 controls the cell balancing procedure to be discretely executed over a plurality of balancing periods in the case of a battery module that requires a time for cell balancing which is longer than a length of the balancing periods.

On the other hand, in the case of a plurality of battery modules that need cell balancing, the battery controller 200 may sequentially output balancing start signals transferred to these battery modules, rather than simultaneously, because of the characteristics of the signal transferring method between the battery controller and the AFE IC. Referring to FIG. 4 as an example, when entering the balancing period, the battery controller 200 sequentially outputs corresponding balancing start signals in an order of the battery module # 1 -> the battery module # 2 -> the battery module # 3, and thus, the cell balancing of the battery modules is sequentially activated. The balancing start signal may include identification information of (or ID) corresponding battery module together with cell information related to a cell to be balanced, such that each of the integrated circuits 120-1, 120-2, 120-3, ..., and 120-n may determine whether the balancing start signal being currently transmitted is the balancing start signal transmitted to the integrated circuit itself.

Unlike the balancing start signal, the balancing stop signal that is outputted to the battery modules 120-1, 120-2, 120-3, ..., and 120-n to enter the balancing idle mode is a control signal that is applied to all the battery modules in a same way, and thus it is outputted only once to stop the balancing of all the battery modules 100-1, 100-2, 100-3, ..., and 100-n.

Meanwhile, as described with reference to FIG. 4, the battery controller 200 sequentially outputs the balancing start signals, and an order in which the balancing start signals are outputted is generally determined depending on a position of the corresponding battery module. Accordingly, even though the battery modules perform cell balancing during a same balancing period, a time that the balancing is actually performed may vary depending on the battery module. Referring to FIG. 4 as an example, the battery module # 1, the battery module # 2, and the battery module # 3, all performed cell balancing in first, second, and third balancing periods, but an actual time that cell balancing is activated differs from the battery module # 1 > the battery module # 2 > the battery module # 3 due to the deviation of activation time in each balancing period.

In an exemplary embodiment, in order to eliminate such a deviation, a balancing activation order of the battery modules 100-1, 100-2, 100-3, ..., and 100-n may be adjusted by changing an order in which the balancing start signal is outputted every balancing cycle so as to equalize an actual balancing execution time.

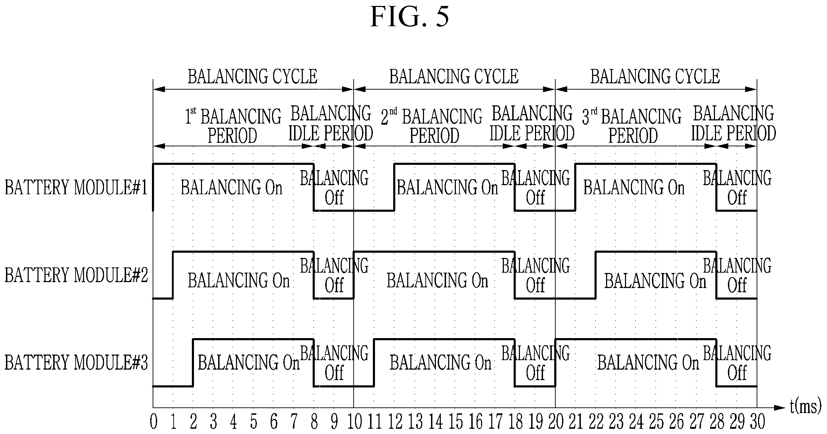

FIG. 5 illustrates an example of equalizing a balancing execution time in a battery management system according to an exemplary embodiment.

Referring to FIG. 5 as an example, during a first balancing period, the battery controller 200 sequentially outputs balancing start signals in an order of the battery module # 1 -> the battery module # 2 -> the battery module # 3, during a second balancing period, the battery controller 200 sequentially outputs balancing start signals in an order of the battery module # 2 -> the battery module # 3 -> the battery module # 1, and during a third balancing period, the battery controller 200 sequentially outputs balancing start signals in an order of the battery module # 3 -> the battery module # 1 -> the battery module # 2. That is, the battery controller 200 controls the balancing activation order of the battery modules to be changed every balancing cycle by cyclically shifting the output order of the balancing start signal of each battery module for each balancing cycle.

As such, the battery controller 200 equalizes the time for performing the actual balancing in the battery module # 1, the battery module # 2, and the battery module # 3 during three balancing periods by changing the order in which the balancing start signal is outputted to the battery modules every balancing period. That is, the average balancing execution time for each balancing period is equalized for all the battery modules.

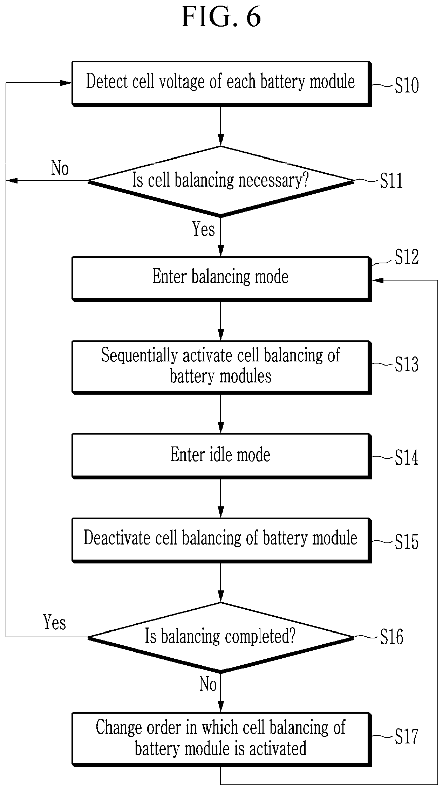

FIG. 6 schematically illustrates a cell balancing control method of a battery management system according to an exemplary embodiment. The cell balancing control method of FIG. 6 may be performed by the battery management system of the battery pack 10 described with reference to FIG. 1.

Referring to FIG. 6, the battery management system according to the present exemplary embodiment cyclically detects cell voltages of the cells 111 constituting each of the battery modules 100-1, 100-2, 100-3, ..., and 100-n through each of the integrated circuits 120-1, 120-2, 120-3, ..., and 120-n (S10).

The cell voltage detection result detected by each of the integrated circuit 120-1, 120-2, 120-3, ..., and 120-n is transmitted to the battery controller 200, and the battery controller 200 determines whether cell balancing for each of the battery modules 100-1, 100-2, 100-3, ..., and 100-n is necessary (S11).

When the battery controller 200 determines that cell balancing is necessary, the battery controller 200 enters the balancing mode (S12), and sequentially outputs balancing start signals to the battery modules 100-1, 100-2, 100-3, ..., and 100-n to sequentially activate cell balancing of the battery modules 100-1, 100-2, 100-3, .. , and 100-n (S13).

When a predetermined time (balancing period) has elapsed after entering the balancing mode, the battery controller 200 enters the balancing idle mode (S14), and the battery controller 200 sequentially outputs balancing stop signals to the battery modules 100-1, 100-2, 100-3, ..., and 100-n to sequentially deactivate cell balancing of the battery modules 100-1, 100-2, 100-3, ..., and 100-n (S15).

Subsequently, the battery management system repeats the steps S12 to S15 every balancing cycle until the cell voltages of the battery modules 100-1, 100-2, 100-3, ..., and 100-n are equalized to complete the cell balancing (S16). In this process, the battery management system equalizes the balancing execution time between the battery modules 100-1, 100-2, 100-3, ..., and 100-n by changing the balancing activation order of the battery modules 100-1, 100-2, 100-3, ..., and 100-n (S17) whenever the steps S12 to S15 are repeatedly performed, that is, every balancing cycle. That is, the average cell balancing execution time for the balancing periods is equalized among the battery modules 100-1, 100-2, 100-3, ..., and 100-n.

Embodiments can provide a battery management system comprising: a plurality of integrated circuits each configured to perform a cell balancing control function of a corresponding battery module among a plurality of battery modules; and a battery controller configured to communicate with the integrated circuits to control cell balancing of the battery modules, and to repeatedly perform a first mode for sequentially activating cell balancing of the battery modules during a first period and a second mode for stopping the cell balancing of the battery modules during a second period that follows the first period, every predetermined cycle, when cell balancing is required for the battery modules, wherein the battery controller is configured to change an order in which the cell balancing of the battery modules is activated in the first mode for each cycle.

The battery management system may comprise the plurality of battery modules. The plurality of battery modules may each comprise a plurality of cells.

The sequentially activating cell balancing of the battery modules may be done according to a predetermined sequence. For example, the predetermined sequence may be determined by a connection order of the battery modules.

The battery management system may form part of a battery pack, the battery pack comprising the battery modules electrically connected in series between two battery pack terminals. Hence, the battery modules may be arranged in an order (e.g. a physical location or electrical connection order) in the battery pack. The balancing activation order of the battery modules may be changed every balancing cycle. For example, this may be done by cyclically shifting the order in which the cell balancing of the battery modules is activated for each cycle.

The battery controller may be configured to change an order in which the cell balancing of the battery modules is activated for each cycle such that an average balancing execution time during the first period is equalized for the battery modules.

The battery controller may be configured to cyclically shift the order in which the cell balancing of the battery modules is activated for each cycle.

Embodiments can provide a cell balancing control method of a battery management system, the method comprising: determining whether or not to perform cell balancing of a plurality of battery modules based on a cell voltage detection result for the battery modules; operating a first mode for sequentially activating cell balancing of a plurality of battery modules during a first period when it is determined that cell balancing is required for the battery modules; operating a second mode for deactivating the cell balancing of the battery modules during a second period when the first period ends; and repeatedly performing the first mode and the second mode every predetermined period until the cell balancing of the battery modules is completed, wherein the repeatedly performing includes changing an order in which the cell balancing of the battery modules is activated in the first mode for each cycle.

While exemplary embodiments of the present invention have been particularly shown and described with reference to the accompanying drawings, the specific terms used herein are only for the purpose of describing the invention and are not intended to define the meanings thereof or be limiting of the scope of the invention set forth in the claims.

### <Description of Symbols>

- 10:: battery pack
- 100, 100-1, 100-2, 100-3, ..., 100-n:: battery module
- 110:: cell stack
- 111:: cell
- 120, 120-1, 120-2, 120-3, ..., 120-n:: integrated circuit
- 121:: monitoring circuit
- 200:: battery controller
- 300:: communication interface
- SWb:: balancing switch
- Rb:: balancing resistance
- Rf:: filter resistance
- Bin:: balancing terminal
- Cin:: input terminal

## Claims

1. A battery management system comprising:
a plurality of integrated circuits (120) each configured to perform a cell balancing control function of a corresponding battery module among a plurality of battery modules (100); and
a battery controller (200) configured to communicate with the integrated circuits to control cell balancing of the battery modules, and to repeatedly perform a first mode for sequentially activating cell balancing of the battery modules during a first period and a second mode for stopping the cell balancing of the battery modules during a second period that follows the first period, every predetermined cycle, when cell balancing is required for the battery modules, **characterised in that** the battery controller is configured to change an order in which the cell balancing of the battery modules is activated in the first mode for each cycle.

2. The battery management system of claim 1, wherein
the battery controller, when entering the first mode, is configured to output corresponding balancing start signals to the battery modules to activate the cell balancing of the battery modules.

3. The battery management system of claim 2, wherein
the battery controller is configured to change a cell balancing activation order of the battery modules by changing an order in which the balancing start signals are outputted for each cycle.

4. The battery management system of any one of claims 1 to 3, wherein
the battery controller is configured to change an order in which the cell balancing of the battery modules is activated for each cycle such that an average balancing execution time during the first period is equalized for the battery modules.

5. The battery management system of any one of claims 1 to 4, wherein
the battery controller is configured to cyclically shift the order in which the cell balancing of the battery modules is activated for each cycle.

6. A cell balancing control method of a battery management system, the method comprising:
determining whether or not to perform cell balancing of a plurality of battery modules based on a cell voltage detection result for the battery modules;
operating a first mode for sequentially activating cell balancing of a plurality of battery modules during a first period when it is determined that cell balancing is required for the battery modules;
operating a second mode for deactivating the cell balancing of the battery modules during a second period when the first period ends; and
repeatedly performing the first mode and the second mode every predetermined period until the cell balancing of the battery modules is completed, **characterised in that** the repeatedly performing includes
changing an order in which the cell balancing of the battery modules is activated in the first mode for each cycle.

7. The cell balancing control method of claim 6, wherein
the operating of the first mode includes:
activating the cell balancing of the battery modules by outputting corresponding balancing start signals to the battery modules.

8. The cell balancing control method of claim 7, wherein
the changing includes:
changing a cell balancing activation order of the battery modules by changing an order in which the balancing start signals are outputted for each cycle.

9. The cell balancing control method of any one of claims 6 to 7, wherein
the changing includes:
changing an order in which the cell balancing of the battery modules is activated for each period such that an average balancing execution time during the first period is equalized for the battery modules.

10. The cell balancing control method of any one of claims 6 to 9, wherein
the changing includes
circularly shifting an order in which the cell balancing of the battery modules is activated in the first mode for each cycle.

## Patentansprüche

1. Batterieverwaltungssystem, umfassend:
eine Mehrzahl von integrierten Schaltungen (120), die jeweils dazu ausgestaltet sind, eine Zellenausgleichsteuerungsfunktion eines entsprechenden Batteriemoduls unter einer Mehrzahl von Batteriemodulen (100) auszuführen;
und eine Batteriesteuerung (200), die dazu ausgestaltet ist, mit den integrierten Schaltungen zu kommunizieren, um den Zellenausgleich der Batteriemodule zu steuern und wiederholt einen ersten Modus zum aufeinanderfolgenden Aktivieren des Zellenausgleichs der Batteriemodule während eines ersten Zeitraumes und einen zweiten Modus zum Stoppen des Zellenausgleichs der Batteriemodule während eines auf den ersten Zeitraum folgenden zweiten Zeitraumes zu jedem vorbestimmten Zyklus auszuführen, wenn ein Zellenausgleich für die Batteriemodule erforderlich ist.
**dadurch gekennzeichnet, dass**
die Batteriesteuerung dazu ausgestaltet ist, eine Reihenfolge zu ändern, in der der Zellenausgleich der Batteriemodule in dem ersten Modus für jeden Zyklus aktiviert wird.

2. Batterieverwaltungssystem nach Anspruch 1, wobei
die Batteriesteuerung, wenn der erste Modus eingegeben wird, dazu ausgestaltet ist, entsprechende Ausgleichsstartsignale an das Batteriemodul auszugeben, um den Zellenausgleich der Batteriemodule zu aktivieren.

3. Batterieverwaltungssystem nach Anspruch 2, wobei
die Batteriesteuerung dazu ausgestaltet ist, eine Zellenausgleichaktivierungsreihenfolge der Batteriemodule durch das Ändern einer Reihenfolge, in der die Ausgleichsstartsignale für jeden Zyklus ausgegeben werden, zu ändern.

4. Batterieverwaltungssystem nach einem der Ansprüche 1 bis 3, wobei
die Batteriesteuerung dazu ausgestaltet ist, eine Reihenfolge zu ändern, in der der Zellenausgleich der Batteriemodule für jeden Zyklus aktiviert wird, sodass eine durchschnittliche Ausgleichsdurchführungszeit während des ersten Zeitraumes für die Batteriemodule ausgeglichen wird.

5. Batterieverwaltungssystem nach einem der Ansprüche 1 bis 4,
wobei die Batteriesteuerung dazu ausgestaltet ist, die Reihenfolge, in der der Zellenausgleich der Batteriemodule in dem ersten Modus aktiviert wird, zyklisch zu verschieben.

6. Zellenausgleichsteuerungsverfahren eines Batterieverwaltungssystems, wobei das Verfahren Folgendes umfasst:
Bestimmen, ob ein Zellenausgleich einer Mehrzahl von Batteriemodulen , basierend auf einem Zellspannungerfassungsergebnis für die Batteriemodule, ausgeführt werden soll oder nicht;
Betreiben eines ersten Moduls zum aufeinanderfolgenden Aktivieren eines Zellenausgleichs einer Mehrzahl von Batteriemodulen während eines ersten Zeitraumes, wenn bestimmt wird, dass ein Zellenausgleich der Batteriemodule erforderlich ist;
Betreiben eines zweiten Modus zum Deaktivieren des Zellenausgleichs der Batteriemodule während eines zweiten Zeitraumes, wenn der erste Zeitraum endet; und
wiederholtes Ausführen des ersten Modus und des zweiten Modus zu jedem vorbestimmten Zeitraum, bis der Zellenausgleich der Batteriemodule abgeschlossen ist.
**dadurch gekennzeichnet, dass**
das wiederholte Ausführen
das Ändern einer Reihenfolge, in der der Zellenausgleich der Batteriemodule in dem ersten Modus für jeden Zyklus aktiviert wird, umfasst.

7. Zellenausgleichsteuerungsverfahren nach Anspruch 6, wobei der Betrieb des ersten Modus Folgendes umfasst:
Aktivieren des Zellenausgleichs der Batteriemodule durch Ausgeben entsprechender Ausgleichsstartsignale an die Batteriemodule.

8. Zellenausgleichsteuerungsverfahren nach Anspruch 7, wobei
das Ändern Folgendes umfasst:
Ändern einer Zellenausgleichaktivierungsreihenfolge der Batteriemodule durch Ändern einer Reihenfolge, in der die Ausgleichsstartsignale für jeden Zyklus ausgegeben werden.

9. Zellenausgleichsteuerungsverfahren nach einem der Ansprüche 6 bis 7, wobei
das Ändern Folgendes umfasst: Ändern einer Reihenfolge, in der der Zellenausgleich der Batteriemodule für jeden Zeitraum aktiviert wird, sodass eine durchschnittliche Ausgleichsdurchführungszeit während des ersten Zeitraumes für die Batteriemodule ausgeglichen wird.

10. Zellenausgleichsteuerungsverfahren nach einem der Ansprüche 6 bis 9, wobei das Ändern
zirkulares Verschieben einer Reihenfolge, in der der Zellenausgleich der Batteriemodule in dem ersten Modus für jeden Zyklus aktiviert wird, umfasst.

## Revendications

1. Système de gestion de batterie, comprenant :
une pluralité de circuits intégrés (120) configurés chacun pour exécuter une fonction de commande d'équilibrage d'éléments d'un module de batterie correspondant parmi une pluralité de modules de batterie (100) ; et
une unité de commande de batterie (200) configurée pour communiquer avec les circuits intégrés afin de commander l'équilibrage d'éléments des modules de batterie, et pour mettre en œuvre de façon répétée un premier mode pour activer séquentiellement l'équilibrage d'éléments des modules de batterie au cours d'une première période, et un second mode pour arrêter l'équilibrage d'éléments des modules de batterie au cours d'une seconde période qui fait suite à la première période, à chaque cycle prédéterminé, lorsque l'équilibrage d'éléments est requis pour les modules de batterie,
**caractérisé en ce que** :
l'unité de commande de batterie est configurée pour changer un ordre dans lequel l'équilibrage d'éléments des modules de batterie est activé dans le premier mode pour chaque cycle.

2. Système de gestion de batterie selon la revendication 1, dans lequel :
l'unité de commande de batterie est configurée pour, lorsqu'elle passe au premier mode, émettre des signaux de démarrage d'équilibrage correspondants vers les modules de batterie afin d'activer l'équilibrage d'éléments des modules de batterie.

3. Système de gestion de batterie selon la revendication 2, dans lequel :
l'unité de commande de batterie est configurée pour changer un ordre d'activation d'équilibrage d'éléments des modules de batterie en changeant un ordre dans lequel les signaux de démarrage d'équilibrage sont émis pour chaque cycle.

4. Système de gestion de batterie selon l'une quelconque des revendications 1 à 3, dans lequel :
l'unité de commande de batterie est configurée pour changer un ordre dans lequel l'équilibrage d'éléments des modules de batterie est activé pour chaque cycle, de manière qu'un temps moyen d'exécution d'équilibrage au cours de la première période soit égalisé pour les modules de batterie.

5. Système de gestion de batterie selon l'une quelconque des revendications 1 à 4, dans lequel :
l'unité de commande de batterie est configurée pour décaler cycliquement l'ordre dans lequel l'équilibrage d'éléments des modules de batterie est activé pour chaque cycle.

6. Procédé de commande d'équilibrage d'éléments pour système de gestion de batterie, le procédé comprenant les étapes consistant à :
déterminer s'il faut ou non réaliser un équilibrage d'éléments d'une pluralité de modules de batterie, sur la base d'un résultat de détection de tension d'éléments des modules de batterie ;
mettre en œuvre un premier mode pour activer séquentiellement l'équilibrage d'éléments d'une pluralité de modules de batterie au cours d'une première période, lorsqu'il est déterminé qu'un équilibrage d'éléments est requis pour les modules de batterie ;
mettre en œuvre un second mode pour désactiver l'équilibrage d'éléments des modules de batterie au cours d'une seconde période, lorsque la première période prend fin ; et
mettre en œuvre de manière répétée le premier mode et le second mode à chaque période prédéterminée, jusqu'à ce que l'équilibrage d'éléments des modules de batterie soit achevé,
**caractérisé en ce que** la mise en œuvre répétée inclut l'étape consistant à :
changer un ordre dans lequel l'équilibrage d'éléments des modules de batterie est activé dans le premier mode pour chaque cycle.

7. Procédé de commande d'équilibrage d'éléments selon la revendication 6, dans lequel :
la mise en œuvre du premier mode inclut l'étape consistant à :
activer l'équilibrage d'éléments des modules de batterie en émettant des signaux de démarrage d'équilibrage correspondants vers les modules de batterie.

8. Procédé de commande d'équilibrage d'éléments selon la revendication 7, dans lequel :
le changement inclut l'étape consistant à :
changer un ordre d'activation d'équilibrage d'éléments des modules de batterie en changeant un ordre dans lequel les signaux de démarrage d'équilibrage sont émis pour chaque cycle.

9. Procédé de commande d'équilibrage d'éléments selon l'une quelconque des revendications 6 et 7, dans lequel :
le changement inclut l'étape consistant à :
changer un ordre dans lequel l'équilibrage d'éléments des modules de batterie est activé pour chaque période, de manière qu'un temps moyen d'exécution d'équilibrage au cours de la première période soit égalisé pour les modules de batterie.

10. Procédé de commande d'équilibrage d'éléments selon l'une quelconque des revendications 6 à 9, dans lequel :
le changement inclut l'étape consistant à :
décaler circulairement un ordre dans lequel l'équilibrage d'éléments des modules de batterie est activé dans le premier mode pour chaque cycle.
